# EUROPEAN PATENT SPECIFICATION

(11) **EP 0 526 470 B1**
(45) Date of publication and mention of the grant of the patent: **15.02.1995**
(21) Application number: 91906842.9
(22) Date of filing: 28.03.1991
(51) Int. Cl.: F03B 13/00

(54) **HYDRO-ELECTRIC POWER CONVERSION SYSTEM**
HYDROELEKTRISCHE ENERGIEUMWANDLUNGSANLAGE
SYSTEME DE CONVERSION D'ENERGIE HYDRO-ELECTRIQUE

(30) Priority: 27.04.1990 GB 9009559; 03.10.1990 GB 9021514
(43) Date of publication of application: 10.02.1993
(73) Proprietor: HYDRO ENERGY ASSOCIATES LIMITED, Gloucestershire GL50 3DA (GB)
(72) Inventor: BELLAMY, Norman, West, Coventry CV3 6ES (GB)
(74) Representative: Denmark, James
(86) International application number: GB9100488
(87) International publication number: WO9117359

(56) References cited:
- EP-A- 100 799
- EP-A- 162 814
- DE-A- 3 716 093
- Patent Abstracts of Japan, volume 7, no. 63(M-200)(1208), 16 March 1983 & JP, A, 57206778

## Description

This invention relates to hydro-electric power systems, and in particular concerns a conversion system for converting the energy, especially but not exclusively head energy in liquids to a more readily usable form, for example electrical energy. The invention has particular utility for low water head applications such as on rivers, and possibly tidal sites. By low head as used in this specification is meant water head from 1 m to 10 m, the systems being adapted to produce power capacities in the range 100 kw to 10 mw. Although the system of the invention has particular and best application to these low water head applications, it is not suggested that the inventive system could not be used with higher or lower head capacities.

When one considers the conventional installations which are utilised for the production of electrical power, one immediately identifies (a) power stations which use a fossil fuel, and (b) hydro-electric installations utilising heads of water to drive water turbines. The system of the present invention is best compared with the hydro-electric power stations in that the head or kinetic energy in water or the like is converted into energy in a readily usable form, but the system of the present invention can be compared with both of the abovementioned conventional systems in providing for the production of electrical power at a lower unit cost than the hydro-electric power stations and fossil fuel fired power stations.

Low head hydro-electric power was in fact used extensively from the end of the last century, and the flow of many European rivers was controlled by weirs or barrages to provide the necessary water head. The majority of the river structures remain but are unused as power sources, because of the poor economics involved in converting the water heads of such structures into electrical energy using conventional water turbines. This is due to the fact that it is expensive to convert low head energy by means of large diameter, slow speed water turbines. These redundant structures are now creating more interest in that the cost of electricity generation has escalated sharply in recent times.

For example, for developing countries, conventional hydroelectric power appears to be the most economically attractive way for providing the country's electrical power, but in many cases the huge capital costs and absence of an adequate electrical distribution system, leads to the result that the adoption of conventional hydro-electric power stations is not possible. A large number of schemes operating on a small head however provide an alternative and more economical source of electrical power.

In the United Kingdom, recent legislation has enabled private organisations to generate and sell electricity to the Central Electricity Generating Board and frequently it will be attractive to such organisations because of the proximity to a suitable water site, to deploy a low head energy conversion system for producing electrical power from the available water head. In the United Kingdom, there are many suitable sites, such as old mill sites which could be used for the generation of small power outputs suitable for supplying the national grid or the needs of the owner of the site, and perhaps a number of surrounding users.

It is believed that the potential for low head hydro-electric power is likely to be considerable in the not too distant future.

There have previously been proposed a number of systems for the conversion of low head water energy to another form suitable for providing electrical energy, and one scheme is set out in British Patent Application 2096706A, which discloses a water engine comprising a plurality of vanes arranged as a barrage. The water by its head and/or kinetic energy acting on one side of the barrage causes a reaction on the vanes moving the vanes in the direction of the barrage until an extreme position is reached when the vanes change inclination and the water reaction causes the vanes to move in the opposite direction. This mechanical reciprocation of the vanes is utilised for providing electrical energy. It is believed that the mechanical complexities of this device will cause problems in operation.

Another low head system which has been proposed is disclosed in a paper presented by Coventry Lanchester Polytechnic September 1984, authors Peatfield, Duckers, Lockett, Loughridge, White and West and as published in U.K. Patent Specification No. 2143284 which comprises an enclosed chamber into which available water flow is directed in order to effect displacement of air above the water level. The water flow can be controlled by the operation of inlet and outlet valves in such a way that the effective driving pressures for both the filling and emptying cycles can be a large portion of the head available at the site chosen. The operational cycle commences with the opening of the water inlet valve, allowing water into the empty chamber with the outlet valve closed, filling the chamber with water and driving the air out under pressure through a turbine known as a Wells turbine, which is of a bi-directional drive type in that the propelling air can be passed over the blades in either direction and will drive the turbine in the same direction as compared to the uni-directional conventional turbine which requires the fluid to pass through the blades in one direction only. At a suitable point near the end of the filling cycle the inlet valve is closed and the outlet valve is then opened allowing exit of the water to the downstream side of the water retaining structure. This emptying process causes air to be sucked back into the chamber through the still rotating Wells turbine which is thus used to extract energy at the optimum rate during both parts of the cycle. Then at a suitable point near the bottom of the emptying cycle, the outlet valve is closed and the whole cycle recommences with the re-opening of the inlet valve.

This system is viewed as having problems concerning the opening and closing of the inlet and outlet valves which must operate once per 10 seconds, and such high frequency long term operation could lead to operating difficulties.

In European Application 0198445, another form of hydroelectric power conversion system is described in which the flow of water is caused to pass along a conduit. In the conduit are membranes, and the water flows over the membranes in turn. The system also includes air which is alternately pumped between cavities defined to the underside of the membranes, as a result of the water flowing over the membranes in sequence. The back and forth displacement of the air is used to drive a Wells turbine in order to provide output power.

Whilst this system works extremely satisfactorily, in fact a difficulty has been identified with the system as a result of testing a full size model, and that difficulty resides in the provision of a sufficiently large and strong membrane. In other words the difficulty is a practical one. Furthermore such a large membrane is a rather expensive as well as being liable to failure.

Other systems for extracting energy on flowing liquids are set forth in European Patent Specification Nos. 0162814 and 0100799, German Patent Specification No DE 3716093 A1 and Japanese Patent No 57206778 of which only European Patent Specification No 0162814 and the Japanese Patent have particular relevance.

The European Patent Specification relates to a hydraulic air compressor wherein air is entrained in a flowing stream of water to raise its pressure and then it is collected in a pressure chamber so that it can be used to drive a prime mover. In the Japanese Patent, air is drawn by flowing liquid into a venturi throat in a vertical pipe through which the liquid falls and use is made of the induced air flow to drive a turbine to provide power output.

The present invention seeks to provide a hydro-electric power conversion system which bears similarity to the arrangement described in European patent application 0198445 insofar as flowing water is used in order to pump air (or other gas), and the air so pumped is used for the driving of a prime mover such as an air turbine of the Wells or other type. The system according to the present invention however is such as to render the requirement for the provision of a membrane unnecessary.

According to the present invention there is provided an energy conversion system for converting the energy in liquid which flows from a higher level to a lower level, comprising duct means through which the liquid is caused to flow in flowing from said higher level to the lower level, means for introducing a gas into the duct means so that it is moved along the duct means by the flowing of liquid, and some of the potential energy of the liquid is transferred into the kinetic energy in the gas, and including kinetic energy conversion means arranged to convert the kinetic energy of the gas into energy in a more readily usable form, characterised in that said duct means comprises an upper curved crest portion leading to a generally downwardly inclined portion which extends from the crest portion to the lower level and lies generally at an acute angle to the horizontal.

Preferably the water flow is switched in flow direction by means enabling the introduction of said gas which preferably is air.

The switching may be achieved by means of a valve or vane which may be a mechanical valve or vane or a pneumatic valve or vane. In another arrangement, switching is achieved by small movements of adjacent wall portions and/or by pilot jets.

The duct means may be a single duct extending between the higher and lower levels, and in one arrangement, in the region of the higher level discrete pockets of air are introduced into the water so that slugs of water travel down the duct and between the slugs are pockets of entrapped air which move from the high level to the low level.

The introduction of air is preferably effected either by passive means at the low pressure point of a venturi/syphon or by the use of a low pressure turbine.

Preferably, the duct section in side view is shaped in the form of an antigravity curve. An anti-gravity curve would be for example one which conforms to the shape of the parabola or other curve described by a jet of water which travels freely through air and is arranged with its exit axis upwardly inclined.

Moreover, the duct section may be enlarged towards the lower level in order to enhance the pressure difference between the higher and lower levels.

In the past, direct air entrainment methods such as disclosed in European Patent Application No 016284 have not proved effective in harnessing low head hydroelectric power despite their simplicity and potential low costs. The problem of low efficiency lies with the severe loss mechanisms associated with flow regimes which can occur in two phase flow (air and water) systems. For given flows of the two phases in a given duct the air water interfacial distribution can take any of an infinite number of possible forms. Significant air entrainment gives to irregular secondary water flows, such as recirculation and vortexing, and the primary flow becomes unsteady and disorganised. Further increases in air proportion create conditions for stall which forms dead water regions and the primary flow falls into a jet flow regime.

A key requirement of an efficient air entrainment power conversion system is to create organised two-phase flow patterns which avoid lossy secondary flow and stall. Preferably the proportion of air to water needs to approach 50% if the air injection pressure is to be kept to a fraction of atmospheric pressure which is necessary to avoid cavitation. Direct continuous air injection, which normally produces more bubbles, cannot achieve organised flow patterns for significant air/water proportions. However, as described above, it is possible to use switched air injectors to insert discrete pockets of air into a venturi or venturi/syphon water duct to produce an organised flow pattern. This reduces the loss mechanism in the two phase flow to give improved water to air power conversion efficiency.

As described above air to be injected via a switched air injection means may be supplied through a low pressure turbine into an injector throat at a region where the water pressure is at its lowest, or alternatively the air may be supplied directly from the atmosphere, and the injected air is carried through the antigravity expanding duct before being separated for collection in a centrifugal bend. The exit air is collected at atmospheric pressure or above and may either be fed back to the low pressure turbine to provide a closed circuit operation or alternatively and preferably is dispersed to the atmosphere.

In an arrangement comprising a venturi duct is it envisaged that air injectors will be located within or near to the venturi throat, the throat being designed to produce negative air pressure approximately equal to the applied water head. Alternatively, in a syphon duct the air injectors will be located within or near to the low pressure-region. Preferably the air injectors are located adjacent a hydrofoil such that air is made to flow therearound and discrete pockets of air are produced within the liquid. Once the pockets of air are formed they travel within the duct in the direction of flow of the water and are prevented from rising to the surface of the duct by means of the parabolic shape of the duct which overcomes the effects of gravity. In order to create a preferred pattern of air pockets within the water at least two air injectors are located adjacent to hydrofoils and the injectors are made to operate out of phase such that air pockets generated by the injectors travel lengthwise along the duct in staggered relationship. More specifically, switching air between alternate injectors causes water jets, defined by means of the edges between adjacent hydrofoils, to divert from one hydrofoil wall attachment to the other and it is during this process that an air pocket is created without disrupting water flow.

Careful design of the injectors enables the air water switching to occur in fractions per second which results in the production of a staggered air packet pattern. The hydrofoils may be of any desired shape but preferably are tapered towards the end distal from the air injector.

By shaping the pumping duct, the duct can be arranged to operate in a syphonic manner so that the syphonic effect will pull water from the upper level into the pumping duct at the appropriate angle so that the slugs of water move on said anti-gravity parabola.

In another preferred form of the invention the duct has a venturi throat and a divergent downstream end extending from the throat. This embodiment makes use of the fact that if a jet of water comes into contact with an adjacent wall an effect called wall attachment takes place. The effect is due to fluid adjacent to the wall being swept away giving rise to low pressure at the wall surface. This causes the jet to bend towards the wall and remain attached to it along a gradual curvature. In such arrangement, the switching of the jet can be achieved by very small movements of the adjacent wall and/or jet. One method of switching a water jet between opposite walls of a venturi expansion chamber is to fit guide vanes operated by pilot air pressure signals and use is made of this effect in this embodiment of the invention.

The guide vanes only have to move fractional amounts to switch the water jet from wall to wall and hence they can utilise simple leaf springs rather than hinged elements. Normal alignment of each guide vane induces wall attachment and jet detachment is achieved by switching the pilot air input to a higher pressure (normally atmospheric) relative to the low pressure within the venturi throat. The pressure difference across the vane causes it to bend away from the wall and hence detach the jet. The pilot air also feeds the space left by the switching jet.

The pilot operated jet described eliminates the need for switching of the power input air of the venturi as embodied in some other embodiments of the present invention. There are preferably main power air connections to both sides of the duct downstream of the venturi throat to enable power air to be drawn into the pilot switched air side of the jet; the power air therefore automatically switches into the duct according to the low power switched pilot air.

Embodiments of the present invention will now be described, by way of example, with reference to the accompanying diagrammatic drawings, wherein:-
Fig. 1 shows a side sectional view of a syphon duct arrangement according to the invention and below this is illustrated the energy and pressure profile of the system;
Fig. 2 and 3 show plan views of hydro-electric power conversion systems for explaining the operation of the invention;
Figs. 4 and 5 show respectively a plan and side elevation of the hydro-electric power conversion system also according to the invention;
Fig. 6 shows a syphon duct located below a head of water with an air switch located in a first operative position;
Fig. 7 shows a syphon duct located above a water head with an air switch located in a second operative position;
Fig. 8 shows a plan view of the syphon duct in either Fig. 6 or 7 at the point of air injection;
Figs. 9 and 10 show a part-sectional view of an hydrofoil as seen in Fig. 8;
Figs. 11 and 12 show in side view and plan another embodiment of the present invention;
Fig. 13 is a sectional elevation showing an alternative arrangement;
Figs. 14 and 15 show in side elevation and plan how an apparatus may be installed at a particular site;
Fig. 16 is a plan of a further embodiment of the invention; and
Fig. 17 is a side view of the embodiment of Fig. 16.

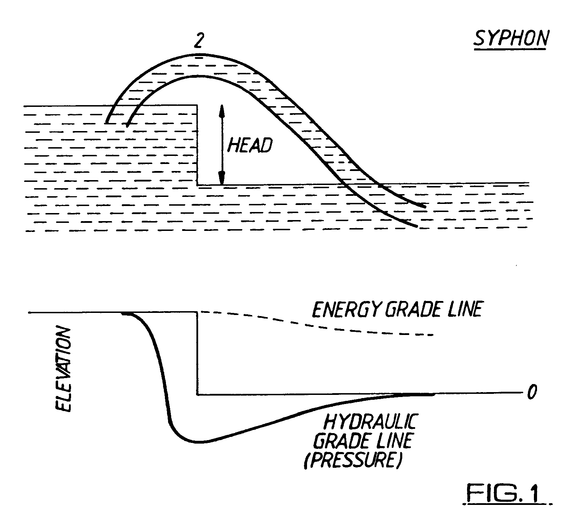

Referring now to the figures and firstly to Fig. 1 which helps to explain the theory of the invention, a syphon duct is such that at the region of constriction, that is the throat, water flows at a high velocity and at low pressure. This can be seen by the energy and pressure profile of the system illustrated below the duct representation. The pressure profile is at its lowest at a point represented by the highest point of the syphon.

The reduction in pressure in the above system is important in a water to air power conversion system as it provides a region where air can be introduced by induction into the flow of water along its pressure gradient. This may be particularly advantageous as the introduction of air may thus be a passive process, that is to say without incurring a need for energy.

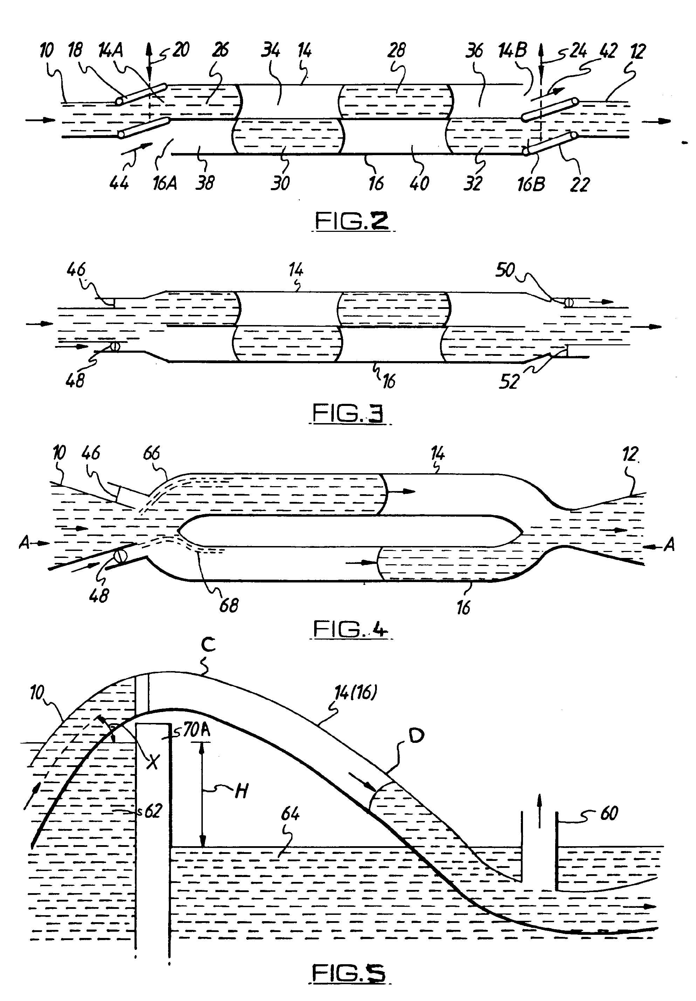

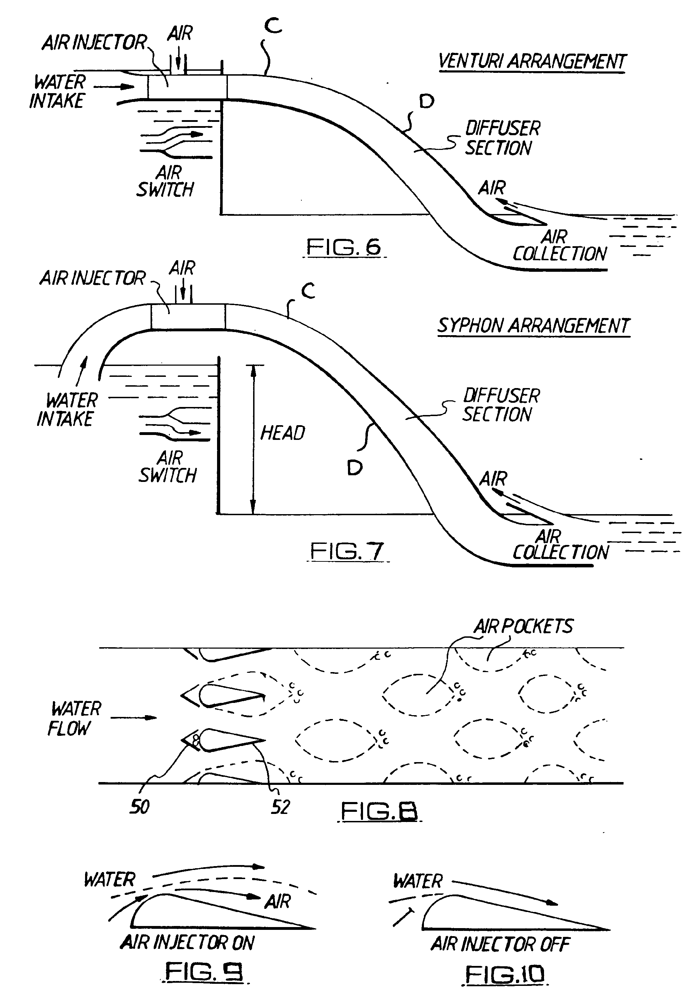

Figs. 2 to 5 are useful to explain a first aspect of the invention shown in Figs 4 and 5 and referring now to Fig. 2, a flow of water, which may be derived from a flowing river, weir or barrage or the like flows through an upstream duct section 10 and eventually emerges from a downstream duct section 12. The sections 10 and 12 are at different heights, section 10 being higher than section 12.

Connecting the upstream and downstream duct sections 10 and 12 are pumping duct sections 14 and 16 which lie side by side as shown. The sections 14 and 16 incline downwardly from the upstream section 10 to the downstream section 12, and the sections 14 and 16 have inlets 14A, 16A and outlets 14B, 16B.

Between the upstream section 10 and the inlets 14A, 16A is a switching valve 18 which is adapted to be moved back and forth as indicated by arrow 20 to direct the flowing water either into inlet 14A or 16A as will be described.

Similarly, there is a switch valve 22 for collecting water from outlet 14B or 16B and for charging same into the section 12. The valve 22 is adapted to be reciprocated as indicated by arrow 24.

The valves 18 and 22 are shown as operating anti-phase so that whilst duct section 10 is charging water into the inlet 14A, duct section 12 is collecting water from outlet 16B.

The principle of the operation will be understood from the drawing in that as the valves 18 and 22 are oscillated as indicated by arrows 20 and 24, so the inflowing water is alternately fed into the respective ducts 14 and 16. Ideally what happens is that slugs of water 26, 28 travel down duct 14, and slugs of water 30, 32 flow down duct 16 and between the slugs are pockets of air 34, 36, 38 and 40. The air is drawn into the inlets 14A and 16A alternately as indicated for example by arrow 44 in Fig. 2.

If desired the air which is pressurised and emerges from the outlets 14, 16 may be returned to the inlets 14A, 16A after passing over an air turbine to drive same for the extraction of electrical energy.

The alternative arrangement shown in Fig. 3 is similar to Fig. 2 except that the air inflow is controlled by means of air valves 46, 48 and the outflow similarly is controlled by air valves 50, 52. The operation of the Fig. 3 embodiment will be readily understood in that instead of mechanically driving the gate valves 18 and 22, the air valves 46, 48, 50 and 52 are alternately opened and closed to give a similar flow pattern through the duct sections 14 and 16.

Referring now to Figures 4 and 5, parts already described in relation to Figs. 2 and 3 have similar reference numerals. In the Figs. 2 and 3 arrangements the duct sections 14 and 16 are shown as being straight, but in accordance with the invention, in Figs. 4 and 5, each duct section 14, 16 has a curved crest portion C extending from the upper level and it leads to a downwardly inclined portion D which extends to the lower level. In fact the sections 14 and 16 and the upstream section 10 are curved and formed preferably in the shape of an anti-gravity parabola. The purpose of so shaping the sections is to provide that the slugs of water in travelling in this curve will at least temporarily be free of the effects of gravity. This means that the slugs will follow the parabolic path without collapsing and will fill the ducts 14 and 16 so that there will be maximum and effective pumping on the air pockets which are driven to an air exhaust 60 from which the pressure air can be collected and delivered to an air turbine.

The anti-gravity curve is the natural curve which would be followed by a jet of water which travels freely after it issues at the angle X in Fig. 5. The upstream section 10 it will be seen has an inlet end thereof immersed in an upstream body of water 62 presenting a head H in relation to the downstream body of water 64 so that in fact the water will be drawn into the duct sections 14 and 16 by a syphonic effect.

As shown in Fig. 4, the inlet and outlet duct sections 10 and 12 are of convergent and divergent shape in plan, and the air valves 46 and 48 are arranged to introduce air alternately into the sections 14 and 16 of which the inlets are curved as indicated so as to lie somewhat in alignment with the respective edges of the duct section 10. This as a particular advantage in that when the apparatus is in the condition shown in Fig. 4, the absence of air in the vicinity of the valve 46 means that the inflowing water will tend to be pulled to the inlet of duct section 14, and the inflow of air through valve 48 will force the water flow also into duct section 14. When the valves are switched, the absence of air in the vicinity of valve 48 creates a suction effect tending to pull the inflowing water into the duct section 16, and the simultaneous introduction of air through valve 46 causes the water to part from the outer wall of duct section 14 and so that the switching will be smooth and with minimum energy losses (the mechanical valve arrangement 18, 20 shown in Fig. 4 does suffer from mechanical energy losses).

The water can therefore be switched smoothly into opposite duct sections 14 and 16, and will effect maximum pumping of the air in the pockets. Energy can be extracted from the flowing air in any suitable manner (preferably by induction) using an air turbine, or alternative energy extraction arrangements may be utilised.

Modifications may of course be made, insofar as in the region of the valves 46 and 48 there may be vanes providing multiple inlets for the inlet ends of duct sections 14 and 16, and to enhance the switching of the water flow into the duct sections 14 and 16 there may be flexible membrane flaps 66 and 68 bridging the valve inlets of valves 46 and 48 to enhance the switching of the water slugs between the ducts 14 and 16.

The considerable advantage of the embodiments of the invention described, is that utilisation of a flexible membrane is not necessary to achieve the pumping effect, and the structure can be extremely simple.

The particular structure shown in Figs. 4 and 5 has the additional advantage that because it is syphonic in nature, it can be raised from the upstream and downstream bodies of water without disturbing the weir or barrage 70A so that maintenance and repair can be effected easily.

In the systems described, the exhaust air may be pressurised by the equivalent water head, which is about half of the applied head, and its flow is roughly equal to the water flow. In idealised conditions both the water and air flows at the intake and outlet are continuous and unidirectional. Air power output from such a system would be smooth and could be combined with parallel systems which may be out of phase with the first mentioned system. For example three systems operating in three-phase operation would provide smoother power output. The collection of the air at the downstream end of each of the devices may be by valve or surface collection.

Obviously the slugs of water and air must be of a length not exceeding the length of the duct section. The collected air may be returned by means of a closed circuit sytstem back to the air inlet via an air turbine.

The initial horizontal velocity of the water where it enters the anti-gravity duct is dictated by the applied head.

The inlet air valves can take many forms and are preferably motor driven to achieve cycle times in the region of one second for a three metre head. Automatic valves operated on the basis of changing inlet air pressure can be used.

As mentioned herein the system described is simple in concept and does not require water valves or membranes. It may have a high power rating for its physical size giving low structural costs and it has a high water to air power efficiency. The unidirectional air flow will give smooth power and high air to shaft efficiency. The simple air valves which are used can tolerate air leakage and to a certain extent the system does not require any filtering of the water to remove trash or other debris provided that such materials are of a size which can pass directly through the duct. The system is economical and requires only low cost civil engineering work to install.

Further embodiments are shown in Figs. 6 to 12 where either a single venturi duct arrangement, located below a water head, or a single syphon duct arrangement, located above a water head, carries water from a first higher level to a second lower level and air is introduced into the duct at the point of lowest pressure. The means by which air is introduced into the duct may be either active insofar as it requires the input of energy, for example by means of a low pressure turbine, or it may be passive where no energy input is required, for example by means of passive diffusion along a pressure gradient.

In each embodiment is shown the duct comprises a curved crest portion C and an inclined portion D.

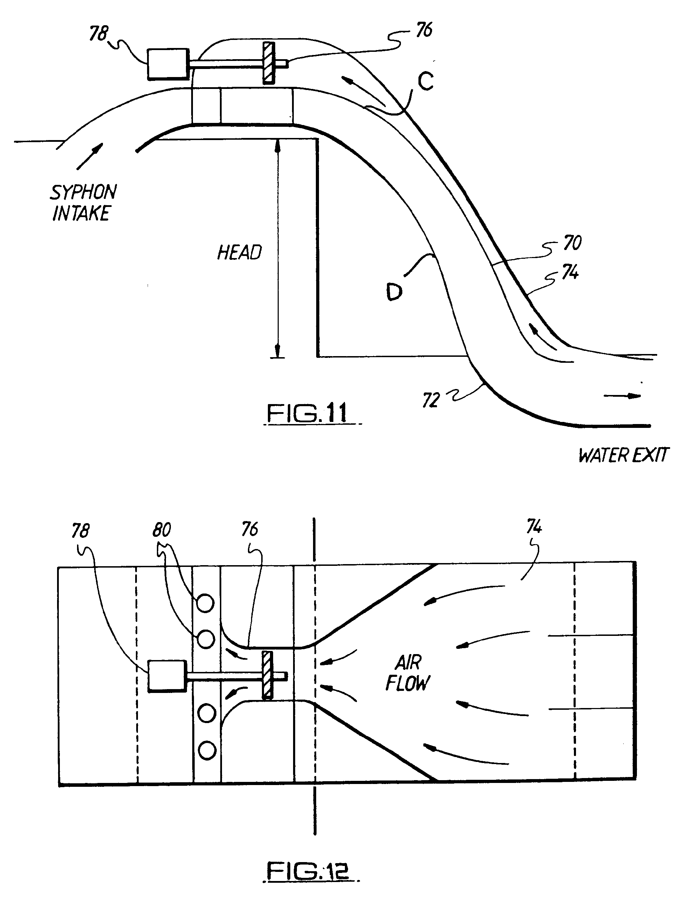

An air injection or induction means is shown in Fig. 8 and it comprises at least one air inlet 50 located immediately adjacent a tapered shaped hydrofoil 52.

Thus it can be seen by reference to Fig. 9 that when the air injection means is switched on air flows about the surface of the hydrofoil 52 and a water jet defined by the edges between adjacent hydrofoils is deflected away from the flow of air. This has the effect of creating a discrete packet of air which flows about the surface of the hydrofoil in the direction of flow of the water until it eventually breaks free therefrom and travels progressively along the duct away from the region of low pressure. Conversely, as seen in Fig. 10, when the air injection means is switched off adjacent jets of water are no longer deflected away from the surface of the hydrofoil. By sequentially alternating the operational status of adjacent air injectors it is possible to provide a staggered pattern of discrete air packets flowing within the water. The side sectional view of the duct represents an anti-gravity curve and the air packets are prevented from migrating to the upper surface of the duct as a result of the anti-gravity profile of the duct. The arrangement of the system is designed to minimize the amount of turbulence and so safeguard against the formation of air bubbles produced by the discrete packets of air dispersing.

Once the packets of air have been introduced into the system they flow along the duct from a first higher level to a second lower level and in so flowing they are pressurised and thus provide a means of powering an air turbine system. It can therefore be seen that the entire arrangement can be likened to an air pump where the induction and flow of air can be used to drive a turbine.

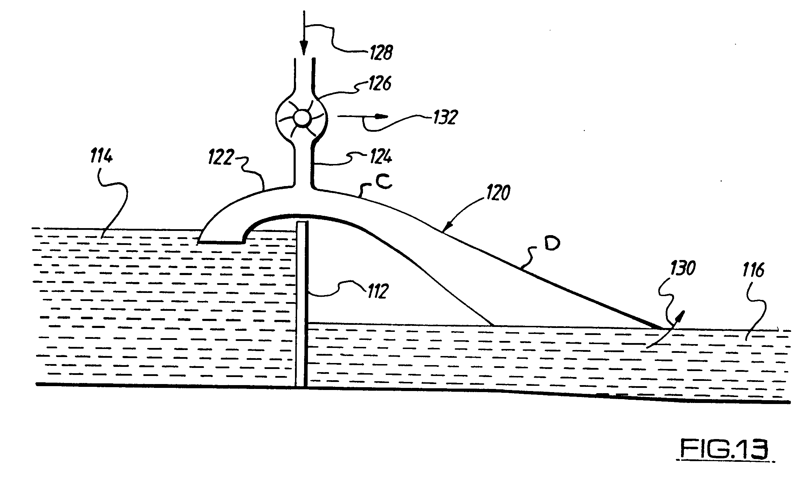

One arrangement is illustrated in Fig. 11 where a syphon duct 71 is curved 72 at its lower level such that air is hydrostatically forced to the upper surface of the duct where it is collected by a second duct 74 and returned to an air turbine 76 in order to operate a generator 78. Fig. 12 represents a plan view of Fig. 11 where it can be seen that pressurised air collected in duct 74 is returned to the turbine 76 and ultimately powers the generator 78. In this arrangement air valves 80 are integral with the injectors 50 and receive low pressure air direct from the turbine 76. The high-speed air turbine 76 can have Wells or propellor type rotors and is directly coupled to an external induction generator or alternator. Air is ducted from the air collector and any losses are made up by venting from atmosphere. In this system output power is steady and can be matched to the load by varying switching periods.

It is also envisaged, though not illustrated, that vertical separators may be located within the duct in line with water channels such that staggered layers of water packets may flow along the duct from a first higher level to second lower level. It is also envisaged that the air injectors may be arranged in a horizontal manner as opposed to a vertical manner in order to vary the nature of the air packet.

It will be understood, that although, in Fig. 8, a duct is shown having a plurality of air injectors in combination with hydrofoils it is within the scope of the invention to provide a single injector pair.

In a further alternative arrangement in accordance with Fig. 8, an additional channel may be provided along the outermost side of the peripheral hydrofoils, those located at the edge of the duct. This would enable a small jet of water to flow about the outermost edge of the peripheral hydrofoils such that the air packet emerging therefrom will not be caused to interact with the duct wall and the result of this would be to reduce the risk of turbulence.

In the described embodiments energy is generated from a flow of liquid such as for example in the water flowing in a river bed in that the head causes flow to travel through a conduit, and by virtue of that flow air is drawn into the conduit and is caused to travel with the liquid, the inflow of the air into the conduit being utilised for the driving of a prime mover, such as an air turbine from which energy such as electrical energy can be derived.

By this means, electrical energy is produced simply from the flowing liquid. By virtue of the use of air turbines or other prime movers, practical systems can result.

The air entrapment in the water flow may result in a pressurisation of the air, and the air under pressure can be used for the driving of the prime mover, but whilst this is a structural possibility, in practical terms this arrangement may cause problems as regards construction of an installation in that air chambers may have to be created so as to trap relatively large volumes of air under pressure as described in European Patent Specification No 0162814 to make the equipment efficient. If this is not done, then inlet and outlet losses may be too great to render the system practical.

It is particularly advantageous to induce the air from the atmosphere using the flow of liquid, and to drive the prime mover by the air flow as it moves from the atmosphere and towards but before it is entrained in the flowing water whereby the collected air is simply returned to atmosphere, and switching devices may not be necessary.

When the inflowing induced air is used for the driving of the prime mover much of these disadvantages of the prior art are overcome, and by control of the air entrainment by duct shape, higher efficiency is achieved. It is still desirable to control the amount of air which is entrained in the water for the reasons given. Experience has shown however that much more simple structures and operation may be adopted within the context of the concept described, whilst still achieving encouraging results.

Any of the features disclosed in any embodiment can be used in connection with any of the other embodiments. Thus, the syphon ducts can also have a venturi throat as the crest portion (C), and that venturi throat can be created by positioning a venturi member in the duct. The said member may be position adjustable along the length of the duct.

Referring now to Figs. 13 to 15, again the duct has a shape comprising an upper curved crest portion C and a downwardly inclined portion D. In Fig. 13, the weir or barrage 112 is bridged by the conduit 120 which is of inverted U-shape as shown so that it extends over the top of the weir 112, and its inlet and outlet ends are submerged in the water in the upstream and downstream sides 114 and 116. The conduit 20 therefore acts in a syphonic mode. It is shown as having a particular curvature, which may be an anti-gravity curvature as described hereinbefore or relating to other embodiments, but again a throat 122 is defined, and the pipe 124 which has a turbine 126 connects to the interior of the conduit 120 in the region of throat 122. When the conduit 120 is primed and the water flows from the upstream side to the downstream side, negative pressure will be created at the throat and air will therefore be drawn into the conduit 120 as indicated by arrow 128. The air is exhausted at the downstream end as indicated by arrow 130.

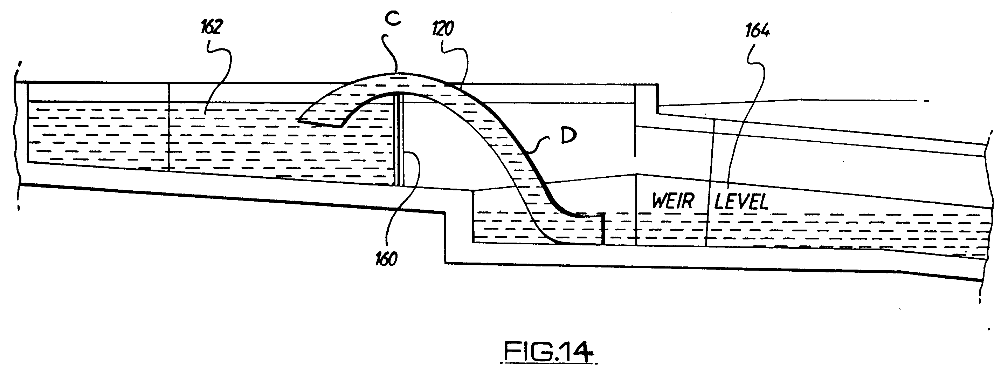

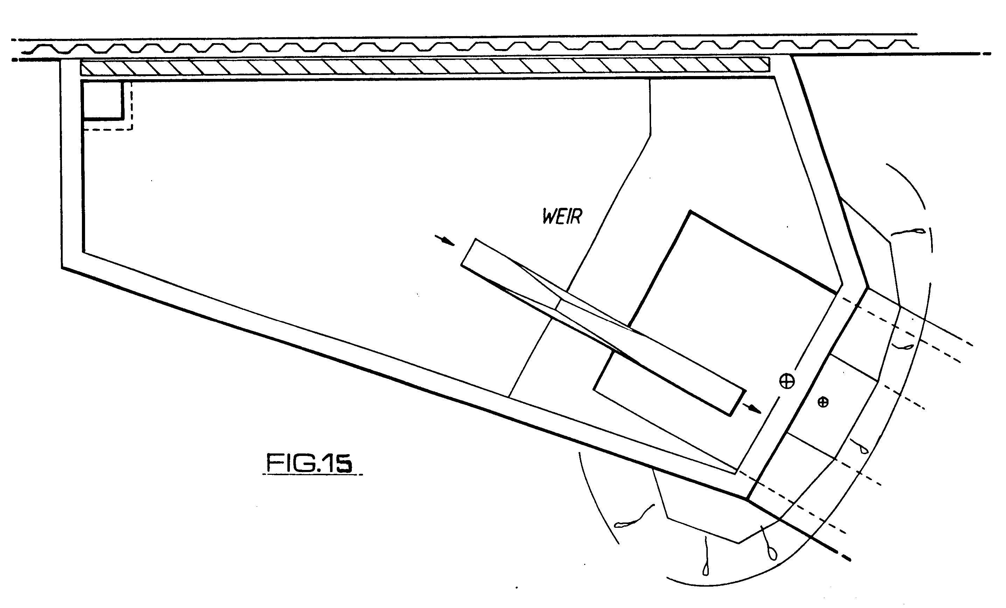

Figs. 14 and 15 show an embodiment of the invention in location at an existing site. A weir or barrage 160 separates flowing river water into an upper basin 162 and a lower basin 164, forming upstream and downstream sections.

The conduit 120 is of the curved preferably anti-gravity form as shown in Fig. 13, and a consideration of Fig. 15 will show that the conduit may be relatively narrow compared to the width of the weir or barrage.

The apparatus as will be appreciated from the Figs. 14 and 15 is extremely simple, and for repair and the like it can be adapted readily to be raised clear of the weir as required. There are no substantial fixing foundations required although it may be necessary to stabilise the conduit as to its position in relation to the upstream and downstream basins. When the conduit is removed from the weir or barrage, a sluice gate or the like in the barrage may be opened to allow the flow of liquid from upstream to downstream or other flow diverter means may be employed.

At the side, the upstream and downstream basins may in fact be off line of the river path, and control gates or the like may be arranged to divert water into the upstream basin when the energy extraction apparatus is to be put into use.

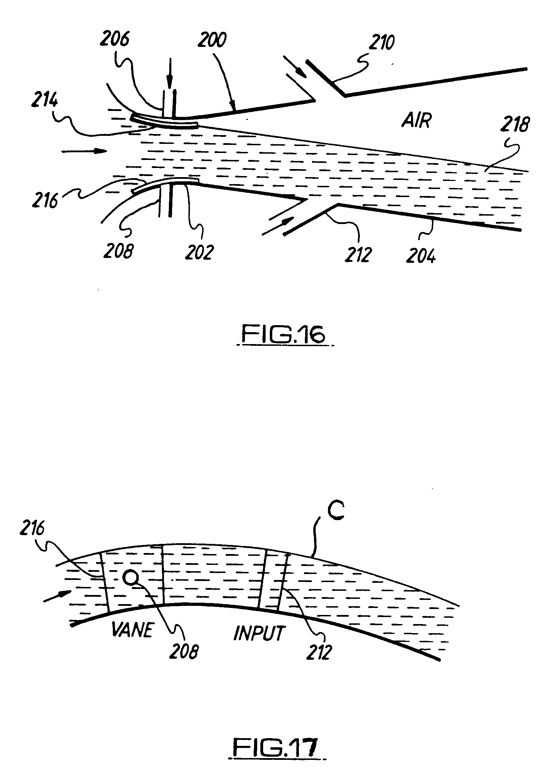

A further feature is shown in Figs. 16 and 17 and this embodiment operates on the principle that if a jet of water comes into contact with an adjacent wall an effect called wall attachment takes place. The effect is due to fluid adjacent to the wall being swept away giving rise to low pressure at the wall surface. This causes the jet to bend towards the wall and remain attached to it along a gradual curvature. In the arrangement illustrated, the jet is again switched as it moves along duct 200 which in plan comprises a venturi throat 202, and a divergent downstream portion 204. Pilot air inlets 206, 208 open into the throat 202 at opposite sides and main power air inlets 210, 212 open into the portion 204 at opposite sides as shown. The duct is preferably curved (in an anti-gravity curve) as shown in Fig. 17. Covering the pilot inlets 206, 208 are deflectible vanes 214, 216. The jet 218 is switched from one side of section 204 to the other by the pilot inlets 206, 208. The application of pressure pulses on vanes 214, 216 causes the guide vanes to move fractional amounts to switch the water jet from wall to wall and hence they can utilise simple leaf springs rather than hinged elements. Normal alignment of each guide vane induces wall attachment and jet detachment is achieved by switching the pilot air input to a higher pressure (normally atmospheric) relative to the low pressure within the venturi throat. The pressure difference across the vane causes it to bend away from the wall and hence detach the jet. The pilot air also feeds the space left by the switching jet.

The pilot operated jet described elminates the need for switching of the power input air of the venturi - syphon systems described hereinbefore. Connection of the main power air to both sides of the venturi downstream throat enables power air to be drawn into the pilot switched air side of the jet. The power air input therefore automatically switches into the venturi connections according to the low power switched pilot air. The power air drawn in is either drawn over a turbine as described herein or is supplied as a pressure medium to drive the turbine.

An important feature of the various embodiments of the invention disclosed herein is the simplicity in providing that atmospheric air is simply drawn into the water flow by virtue of its kinetic energy, and during the induction the air is drawn over an air driven prime mover from which energy in another form e.g. shaft energy and eventually electrical energy may be produced.

## Claims

1. An energy conversion system for converting the energy in liquid which flows from a higher level to a lower level, comprising duct means (14, 16, 70, 120) through which the liquid is caused to flow in flowing from said higher level (62, 114, 162) to the lower level (64, 116, 164), means (18, 46, 48, 128) for introducing a gas into the duct means (14, 16, 70, 120) so that it is moved along the duct means by the flowing liquid, and some of the potential energy of the liquid is transferred into kinetic energy in the gas, and including kinetic energy conversion means (76, 126) arranged to convert the kinetic energy of the gas into energy in a more readily usable form, characterised in that said duct means (14, 16, 70, 120) comprises an upper curved crest portion (C) leading to a generally downwardly inclined portion (D) which extends from the crest portion (C) to the lower level and lies generally at an acute angle to the horizontal.

2. A system according to claim 1, characterised in that said duct means (14, 16, 70, 120) is a syphon duct (14, 16, 70, 120) which extends from the higher level of a weir over the weir (70A, 112) and down to the lower level.

3. A system according to claim 2, characterised in that said syphon duct curves continuously over the weir (70A, 112), and has a venturi throat at the crest portion (C).

4. A system according to claim 3, characterised in that said means (124) for introducing gas comprises a gas induction pipe (124) opening into said throat.

5. A system according to claim 3 or 4, characterised in that the syphon duct (14, 16, 70, 112) is shaped in the form of an anti-gravity curve.

6. A system according to claim 3, 4 or 5, characterised in that said syphon duct (14, 16, 70, 112) has a venturi member therein creating the venturi throat in the duct, said venturi member being adjustable along the length of the duct for varying the position of the throat along the length of the duct.

7. A system according to any preceding claim characterised by switched valve means (18, 46, 48, 50, 206, 208) openable to introduce gas into the duct (14, 16, 70, 112) periodically and alternatively at opposed locations of the duct.

8. A system according to claim 7, characterised in that the duct is in two parallel sections (14, 16) and the gas is introduced by the switched valve means (18, 46, 48) alternatively into the respective duct sections (14, 16).

9. A system according to claim 7, characterised in that the switched valve means (18, 46, 48) includes rockable vanes (18) in the duct which direct the flow of liquid to one section (14) and then the other section (16) of the said duct.

10. A system according to any preceding claim, characterised in that means for introducing comprises a gas induction pipe (124) opening into said duct and the energy conversion means (126) is in the induction pipe.

11. A system according to any preceding claim, characterised in that the downwardly inclined portion D of the duct is of divergent shape.

12. A system according to claim 11, when taken with claim 3, characterised in that the duct has pilot gas inlets (206, 208) at opposite sides of the venturi throat.

13. A system according to claim 12, characterised in that the pilot gas inlets (206, 208) are covered by displaceable vanes (214, 216).

14. A system according to claim 13, characterised in that the vanes (214, 216) are spring plates.

15. A system according to any of claims 12 to 14, characterised by means to apply pressure pulses alternatively to said pilot inlets (206, 208) to deflect the flow of liquid alternatively to opposite sides of the downwardly inclined portion D.

16. A system according to any of claims 11 to 15 characterised by power gas induction pipes (210, 212) opening into the said downwardly inclined portion D, and through which pressure gas is induced by the flow of liquid.

17. A system according to any preceding claim, characterised in that the energy conversion means (76, 126) comprises a turbine (126) located so as to be driven by the gas induced into the liquid flow.

18. A system according to any preceding claim characterised in that the energy conversion means includes a gas turbine.

19. A system according to any preceding claim characterised in that the energy conversion means includes an electric generator (28).

20. A system according to any preceding claim, characterised in that the flowing liquid is water of a stream, river or canal.

21. A system according to any preceding claim characterised in that the gas is air drawn from the atmosphere.

## Patentansprüche

1. Energieumwandlungssystem zum Umwandeln der Energie in einer Flüssigkeit, welche von einem höheren Niveau zu einem niedrigeren Niveau fließt, mit einem Leitungsmittel (14, 16, 70, 120), durch welches die Flüssigkeit veranlaßt wird, von dem höheren Niveau (62, 114, 162) zu dem niedrigeren Nieveau (64, 116, 164) zu fließen, einem Mittel (18, 46, 48, 128) zum Einleiten von Gas in das Leitungsmittel (14, 16, 70, 120) derart, daß das Gas durch die fließende Flüssigkeit längs der Leitungsmittel bewegt wird und dabei etwas von der potentiellen Energie der Flüssigkeit in kinetische Energie des Gases übergeführt wird, und mit einem Umwandlungsmittel (76, 128) zum Umwandeln von kinetischer Energie, welche so ausgebildet ist, daß es die kinetische Energie des Gases in eine leichter nutzbare Energieform umwandelt, **dadurch gekennzeichnet**, daß das Leitungsmittel (14, 16, 70, 120) einen oberen, gekrümmten Scheitelabschnitt (C) aufweist, welcher zu einem im wesentlichen abwärts geneigten Abschnitt (D) führt, der sich von dem Scheitelabschnitt (C) zu dem unteren Niveau erstreckt und im wesentlichen unter einem spitzen Winkel bezüglich der Waagrechten liegt.

2. System nach Anspruch 1, **dadurch gekennzeichnet,** daß das Leitungsmittel (14, 16, 70, 120) eine Syphonleitung (14, 16, 70, 120), welche sich von dem höheren Niveau eines Wehres über das Wehr (70A, 112) hinüber und herab zu den unteren Niveau erstreckt.

3. System nach Anspruch 2, **dadurch gekennzeichnet**, daß die Syphonleitung stetig über das Wehr (70A, 112) gekrümmt ist und an dem Scheitelabschnitt (C) eine Venturi-Düse aufweist.

4. System nach Anspruch 3, **dadurch gekennzeichnet**, daß das Mittel (124) zum Einleiten von Gas ein Gaseintrittsrohr (124) umfaßt, welches sich in die Düse öffnet.

5. System nach Anspruch 3 oder 4, **dadurch gekennzeichnet**, daß die Syphonleitung (14, 16, 70, 112) in Form einer Gegen-Schwerkraftkurve geformt ist.

6. System nach einem der Ansprüche 3, 4 oder 5, **dadurch gekennzeichnet**, daß in der Syphonleitung (14, 16, 70, 112) ein Venturi-Organ angeordnet ist, welches die Venturi-Düse in der Leitung bildet, wobei das Venturi-Organ längs der Länge der Leitung einstellbar ist, um die Lage der Düse längs der Länge der Leitung zu variieren.

7. System nach einem der vorhergehenden Ansprüche, **gekennzeichnet durch** ein geschaltetes Ventilmittel (18, 46, 48, 50, 206, 208), welches geöffnet werden kann, um Gas in die Leitung (14, 16, 70, 112) periodisch und abwechslungsweise an gegenüberliegenden Stellen der Leitung einzuführen.

8. System nach Anspruch 7, **dadurch gekennzeichnet**, daß die Leitung zwei parallele Abschnitte (14, 16) aufweist und daß das Gas mittels des geschalteten Ventilmittels (18, 46, 48) abwechselnd in die betreffenden Leitungsabschnitte (14, 16) eingeführt wird.

9. System nach Anspruch 7, **dadurch gekennzeichnet,** daß das geschaltete Ventilmittel (18, 46, 48) hin- und herbewegbare Steuerflügel (18) innerhalb der Leitung aufweist, welche die Strömung der Flüssigkeit in den einen Abschnitt (14) und anschließend in den anderen Abschnitt (16) der Leitung lenken.

10. System nach einem der vorhergehenden Ansprüche, **dadurch gekennzeichnet,** daß das Mittel zum Einleiten von Gas ein Gaseintrittsrohr (124) umfaßt, welches sich in die Leitung öffnet und daß sich das Energieumwandlungsmittel (126) in dem Gaseintrittsrohr (124) befindet.

11. System nach einem der vorhergehenden Ansprüche, **dadurch gekennzeichnet,** daß der abwärts geneigte Abschnitt (D) der Leitung eine divergierende Form aufweist.

12. System nach Anspruch 11 für dessen Rückbeziehung auf Anspruch 3, **dadurch gekennzeichnet**, daß die Leitung an gegenüberliegenden Seiten der Venturi-Düse Gasführungseinlässe (206, 208) aufweist.

13. System nach Anspruch 12, **dadurch gekennzeichnet,** daß die Gasführungseinlässe (206, 208) mit verschiebbaren Flügeln (214, 216) abgedeckt sind.

14. System nach Anspruch 13, **dadurch gekennzeichnet,** daß die Flügel (214, 216) Federblätter sind.

15. System nach einem der Ansprüche 12 bis 14, **gekennzeichnet durch** ein Mittel zum abwechselnden Anlegen von Druckimpulsen an die Führungseinlässe (206, 208), um die Strömung der Flüssigkeit abwechselnd zu gegenüberliegenden Seiten des abwärts geneigten Abschnitts (D) abzulenken.

16. System nach einem der Ansprüche 11 bis 15, **gekennzeichnet durch** Druckgas-Einführungsrohre (210, 212), welche sich in den abwärts geneigten Abschnitt (D) öffnen und durch welche Druckgas in die Strömung der Flüssigkeit eingeleitet wird.

17. System nach einem der vorhergehenden Ansprüche, **dadurch gekennzeichnet**, daß das Energieumwandlungsmittel (76, 126) eine Turbine (126) umfaßt, welche so angebracht ist, daß sie von dem in die Flüssigkeitsströmung eingeleiteten Gas angetrieben wird.

18. System nach einem der vorhergehenden Ansprüche, **dadurch gekennzeichnet,** daß des Energieumwandlungsmittel eine Gasturbine umfaßt.

19. System nach einem der vorhergehenden Ansprüche, **dadurch gekennzeichnet,** daß das Energieumwandlungsmittel einen elektrischen Generator (28) umfaßt.

20. System nach einem der vorhergehenden Ansprüche, **dadurch gekennzeichnet**, daß die strömende Flüssigkeit Wasser eines Stromes, Flusses oder Kanals ist.

21. System nach einem der vorhergehenden Ansprüche, **dadurch gekennzeichnet,** daß das Gas Luft ist, welche von der Atmosphäre angesaugt wird.

## Revendications

1. Système de conversion d'énergie pour convertir l'énergie d'un liquide qui coule d'un niveau supérieur vers un niveau inférieur, comprenant un moyen de canalisation (14, 16, 70, 120) à travers lequel le liquide est tenu de s'écouler en passant dudit niveau supérieur (62, 114, 162) au niveau inférieur (64, 116, 164), un moyen (18, 46, 48, 128) pour introduire un gaz dans le moyen de canalisation (14, 16, 70, 120) afin qu'il soit déplacé le long du moyen de canalisation par le liquide qui s'écoule, et qu'une partie de l'énergie potentielle du liquide soit transférée en énergie cinétique dans le gaz, et comprenant un moyen (76, 126) de conversion de l'énergie cinétique du gaz en énergie d'une forme plus appropriée à son utilisation, caractérisé en ce que ledit moyen de canalisation (14, 16, 70, 120) comprend une partie supérieure de niveau maximum incurvée (C) menant à une partie généralement inclinée descendante (D) qui va de la partie de niveau maximum (C) au niveau inférieur et qui fait généralement un angle aigu avec l'horizontale.

2. Système selon la revendication 1, caractérisé en ce que ledit moyen de canalisation (14, 16, 70, 120) est une canalisation en siphon (14, 16, 70, 120) qui va du niveau supérieur d'un barrage par dessus le déversoir (70A, 112) et descend jusqu'au niveau inférieur.

3. Système selon la revendication 2, caractérisé en ce que ladite canalisation en siphon s'incurve continuellement au-dessus du déversoir (70A, 112), et a un rétrécissement en venturi dans sa partie de niveau maximum (C).

4. Système selon la revendication 3, caractérisé en ce que ledit moyen (124) pour introduire du gaz comprend un tuyau d'injection de gaz (124) débouchant dans ledit rétrécissement.

5. Système selon l'une des revendications 3 ou 4, caractérisé en ce que la canalisation en siphon (14, 16, 70, 112) a la forme d'une courbe anti-gravité.

6. Système selon l'une des revendications 3, 4 ou 5, caractérisé en ce que ladite canalisation en siphon (14, 16, 70, 112) comporte un élément venturi y créant le rétrécissement en venturi dans la conduite, ledit élément venturi étant réglable le long de la canalisation afin de faire varier la position du rétrécissement le long de la conduite.

7. Système selon l'une des revendications précédentes, caractérisé par des moyens vannes commutées (18, 46, 48, 50, 206, 208) pouvant être ouvertes afin d'introduire du gaz dans la canalisation (14, 16, 70, 112) périodiquement et alternativement en des emplacements opposés de la canalisation.

8. Système selon la revendication 7, caractérisé en ce que la canalisation se compose de deux sections parallèles (14, 16) et en ce que le gaz est introduit par les moyens vannes commutées (18, 46, 48) alternativement dans les sections correspondantes de canalisation (14, 16).

9. Système selon la revendication 7, caractérisé en ce que les moyens vannes commutées (18, 46, 48) comprennent des pales inclinables (18) dans la canalisation qui dirigent le débit de liquide vers une section (14), puis vers l'autre section (16) de ladite canalisation.

10. Système selon l'une des revendications précédentes, caractérisé en ce que le moyen pour introduire comprend un tuyau d'injection de gaz (124) débouchant dans ladite canalisation, et en ce que le moyen de conversion d'énergie (126) est dans le tuyau d'injection (126).

11. Système selon l'une des revendications précédentes, caractérisé en ce que la partie inclinée descendante D de canalisation est de forme divergente.

12. Système selon la revendication 11 quand elle est prise avec la revendication 3, caractérisé en ce que la conduite comporte des admissions pilotes de gaz (206, 208) sur les côtés opposés du rétrécissement venturi.

13. Système selon la revendication 12, caractérisé en ce que les admissions pilotes de gaz (206, 208) sont recouvertes par des pales mobiles (214, 216).

14. Système selon la revendication 13, caractérisé en ce que les pales (214, 216) sont des lames de ressort.

15. Système selon l'une des revendications 12 à 14, caractérisé par un moyen pour appliquer des impulsions de pressions alternativement sur lesdites admissions pilotes (206, 208) afin de dévier le flux de liquide alternativement vers les côtés opposés de la partie inclinée descendante D.

16. Système selon l'une des revendications 11 à 15, caractérisé par des tuyaux d'injection de gaz sous pression (210, 212) débouchant dans ladite partie inclinée descendante D, et par lesquels du gaz sous pression est injecté dans le flux de liquide.

17. Système selon l'une des revendications précédentes, caractérisé en ce que le moyen de conversion d'énergie (76, 126) comprend une turbine (126) située de manière à être entraînée par le gaz injecté dans le flux de liquide.

18. Système selon l'une des revendications précédentes, caractérisé en ce que le moyen de conversion d'énergie comprend une turbine à gaz.

19. Système selon l'une des revendications précédentes, caractérisé en ce que le moyen de conversion d'énergie comprend un générateur électrique (28).

20. Système selon l'une des revendications précédentes, caractérisé en ce que le liquide qui s'écoule est l'eau d'un cours d'eau, d'une rivière ou d'un canal.

21. Système selon l'une des revendications précédentes, caractérisé en ce que le gaz est de l'air provenant de l'atmosphère.
